(19) Europäisches Patentamt / European Patent Office / Office européen des brevets

(11) **EP 3 053 686 A1**

(12) **EUROPEAN PATENT APPLICATION**
published in accordance with Art. 153(4) EPC

(43) Date of publication:
**10.08.2016 Bulletin 2016/32**

(51) Int Cl.:
*B23D 51/16* (2006.01)   *B23D 49/16* (2006.01)
*B27B 19/04* (2006.01)   *B27B 19/09* (2006.01)

(21) Application number: **14850799.9**

(22) Date of filing: **03.10.2014**

(86) International application number:
**PCT/JP2014/076557**

(87) International publication number:
**WO 2015/050248 (09.04.2015 Gazette 2015/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.10.2013 JP 2013208810**

(71) Applicant: **Hitachi Koki Co., Ltd.**
**Tokyo 108-6020 (JP)**

(72) Inventor: **KOMAZAKI, Yoshiichi**
**Hitachinaka-City**
**Ibaraki 312-8502 (JP)**

(74) Representative: **Parker, Andrew James**
**Meissner Bolte Patentanwälte**
**Rechtsanwälte Partnerschaft mbB**
**Postfach 86 06 24**
**81633 München (DE)**

(54) **RECIPROCATING TOOL**

(57)   A reciprocating tool enabling reduction in vibration and improvement in cutting speed is provided. The reciprocating tool includes a main body 12, an electric motor 16 provided in the main body 12, a driving gear 19 provided in the electric motor 16, planetary gears 22 connected to the driving gear 19, a ring gear 27 connected to the planetary gears 22, a movement converting portion 49 converting rotation of the ring gear 27 into reciprocating movement, a blade 17 driven by the movement converting portion 49, and a balance weight 36 restricting vibration generated by the reciprocating movement. The ring gear 27 is rotated around a rotation center by power of the electric motor 16.

FIG. 1

**Description**

**TECHNICAL FIELD**

The present invention relates to a reciprocating tool such as a jigsaw and more specifically relates to a reciprocating tool providing a cutting blade with reciprocating movement by means of rotation of a motor.

**BACKGROUND ART**

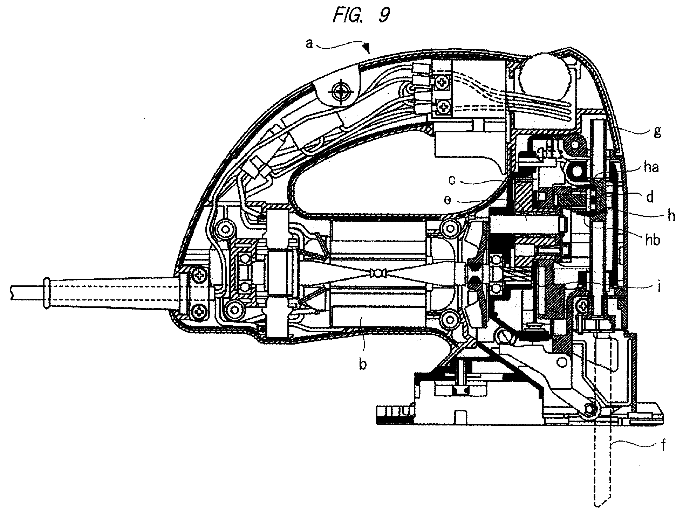

FIG. 9 illustrates a vertical cross-sectional structure of a conventional reciprocating tool converting rotation of a rotating shaft of a motor serving as an electric machine into reciprocating movement to cut an object. As illustrated in FIG. 9, a jigsaw 'a' as an example of the reciprocating tool includes a motor 'b' serving as a driving portion and a gear c serving as a decelerator. To a position on a side surface of this gear 'c' close to an outer circumferential portion of the side surface, a roller-shaped connecting piece 'd' is attached. This connecting piece d is rotatable centering on a support shaft 'e' of the gear c.

The jigsaw a also includes a plunger g driving a blade 'f' serving as a cutting blade in an up-down direction. This plunger 'g' is provided with a connector 'h' having a U-shaped cross-section including a pair of upper and lower guides ha and hb which engages with the connecting piece d.

This connector h causes the rotating movement of the connecting piece d to be converted into reciprocating movement of the plunger g in a vertical direction. The blade f serving as a saw blade is attached to a lower end of the plunger g, and by moving this blade f in manner of a saw, the object can be cut. Also, to restrict vibration caused by the reciprocating movement of the plunger g, the gear c is provided with a balance weight 'i' adapted to move in an opposite phase to that of the plunger g. An example of such a reciprocating tool is a jigsaw described in Patent Document 1.

**RELATED ART DOCUMENT**

**PATENT DOCUMENT**

Patent Document 1: Japanese Patent No. 4525532

**SUMMARY OF THE INVENTION**

**PROBLEMS TO BE SOLVED BY THE INVENTION**

However, since a spur gear is used as the gear c in the jigsaw a, the gear c is installed on an upper side of a main body. For this reason, a length of the plunger g connected with the gear c via the connecting piece d extends to generally cause the centroid of the main body to be located at a high position. A cutting reaction force acts on the blade f at the time of operation. Accordingly, in a case in which a distance between the blade f and the centroid increases, moment acting on the centroid increases, which causes the main body to vibrate easily. In addition, at the time of acceleration and deceleration of the motor b due to cutting load, vibration in a right-left direction is generated by rotational reaction force of the motor b.

The present invention has been achieved to solve the above problems. An object of the present invention is to provide a reciprocating tool enabling reduction in vibration and improvement in operability.

**MEANS FOR SOLVING THE PROBLEMS**

A reciprocating tool of the present invention includes: a main body; a power source provided in the main body; a driving gear provided in the power source; planetary gears connected to the driving gear; a ring gear connected to the planetary gears; a movement converting portion converting rotation of the ring gear into reciprocating movement; a tip end tool driven by the movement converting portion; and a balance weight restricting vibration generated by the reciprocating movement. The ring gear is rotated around a rotation center by power of the power source.

According to an aspect of the present invention, a support shaft rotatably supporting the planetary gears is fixed to the main body.

According to another aspect of the present invention, the driving gear and the ring gear are rotated in opposite directions to each other.

According to another aspect of the present invention, a center of the driving gear and a center of an inner circumference of the ring gear are coaxial.

According to another aspect of the present invention, each support shaft of the planetary gear is arranged on upper and lower sides of the driving gear with the driving gear interposed therebetween and are fixed to the main body.

According to another aspect of the present invention, when a ratio of inertia moment at an assembled part rotated in an equal direction to that of an electric motor to inertia moment at an assembled part rotated in an equal direction to that of the ring gear is y, and a rotational speed ratio of the respective parts is x, $0.46x \leq y \leq 1.38x$ is established.

According to another aspect of the present invention, $0.73x \leq y \leq 1.11x$ is established.

According to another aspect of the present invention, $0.82x \leq y \leq 1.01x$ is established.

According to another aspect of the present invention, a part of the ring gear in a circumferential direction thereof is provided with a thick eccentric cam portion formed to cause the center of the inner circumference and a center of an outer circumference of the ring gear to be eccentric.

According to another aspect of the present invention, the outer circumference of the ring gear is provided with an orbital cam adapted to cause the tip end tool to swing in a front-back direction.

## EFFECTS OF THE INVENTION

The present invention can provide a reciprocating tool enabling reduction in vibration and improvement in operability.

## BRIEF DESCRIPTIONS OF THE DRAWINGS

FIG. 1 is a vertical cross-sectional view of a jigsaw according to an embodiment of the present invention in which a plunger is located at a top dead center;

FIG. 2 is a cross-sectional view of a main part along the line A-A in FIG. 1;

FIG. 3 is a cross-sectional view of a main part along the line B-B in FIG. 1;

FIG. 4 is a vertical cross-sectional view of the jigsaw according to the embodiment of the present invention in which the plunger is located at a bottom dead center;

FIG. 5 is a cross-sectional view of a main part along the line A-A in FIG. 4;

FIG. 6 is a cross-sectional view of a main part along the line B-B in FIG. 4;

FIG. 7 is a graph illustrating relationship between a ratio of inertia moment at planetary gear' s input and output portions and torque acting on a normalized housing;

FIG. 8 is a graph illustrating relationship between a rotational speed ratio of an input shaft and an output shaft and the ratio of inertia moment at the planetary gear' s input and output portions; and

FIG. 9 is a vertical cross-sectional view illustrating a conventional jigsaw.

## DETAILED DESCRIPTION OF PREFERRED EMBODIMENTS

A jigsaw cutting an object will be described with reference to the drawings as a reciprocating tool according to an embodiment of the present invention.

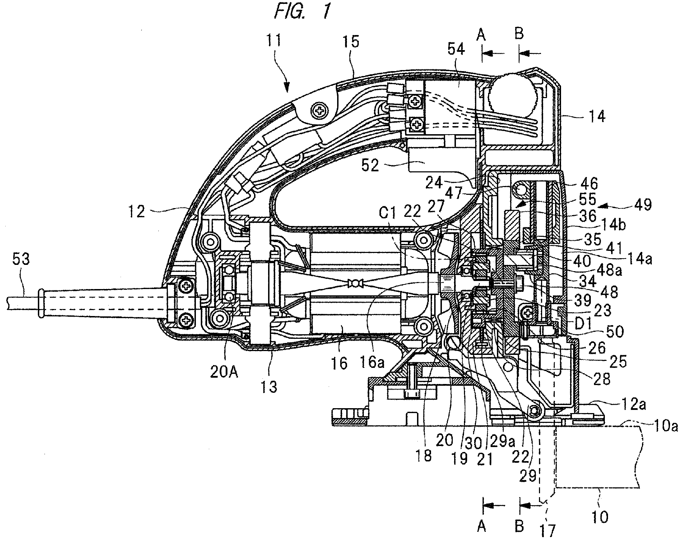

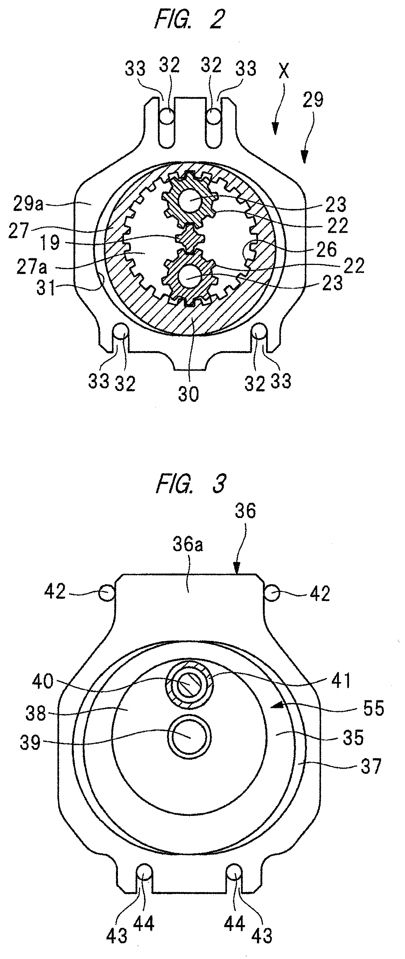

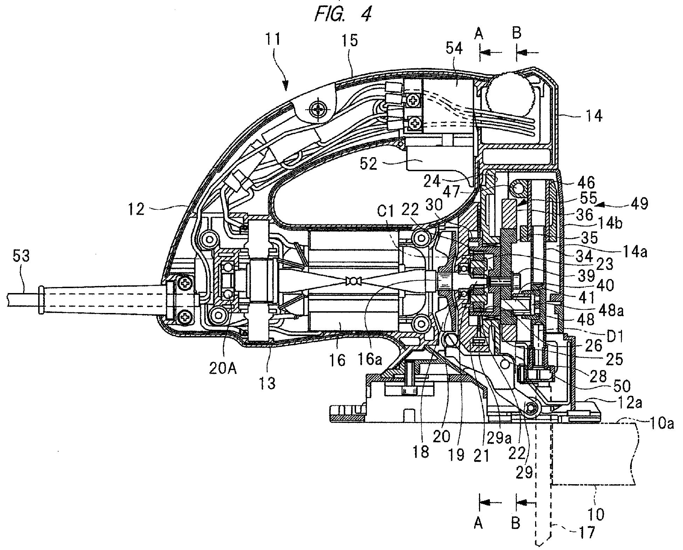

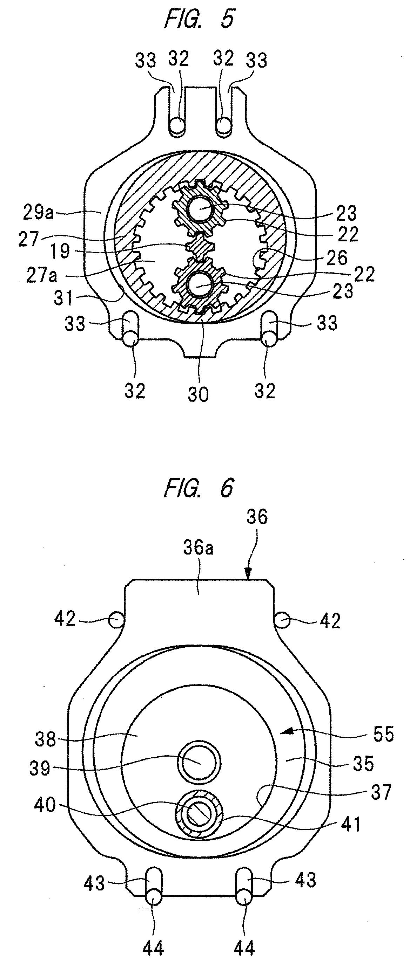

FIG. 1 is a vertical cross-sectional view illustrating an entire structure of a jigsaw 11 according to an embodiment of the present invention, and a blade 17 illustrated in the figure is located at an uppermost position. FIGS. 2 and 3 illustrate cross-sectional structures at different positions of the jigsaw 11. FIG. 4 is a vertical cross-sectional view illustrating an entire structure of the jigsaw 11, and the blade 17 illustrated in the figure is located at a lowermost position. FIGS. 5 and 6 illustrate cross-sectional structures at different positions of the jigsaw 11.

Examples of an object 10 (FIGS. 1 and 4) to be cut by the jigsaw 11 are wood, a soft steel plate, and stainless steel. As illustrated in FIG. 1, the jigsaw 11 includes a main body 12 forming an outer shell. The main body 12 includes a first cylindrical portion 13 extending in a horizontal direction, a second cylindrical portion 14 extending upward from an end portion of the first cylindrical portion 13, and a handle portion 15 connecting the end portion of the first cylindrical portion 13 with an end portion of the second cylindrical portion 14.

Here, the horizontal direction means a right-left direction in FIG. 1. A center line of the first cylindrical portion 13 and a center line of the second cylindrical portion 14 intersect with each other. Also, a front surface of the second cylindrical portion 14 is provided with an opening portion 14a. This opening portion 14a is covered with a cover 14b attached to the front surface of the second cylindrical portion 14. Also, a lower portion of a part at which the first cylindrical portion 13 and the second cylindrical portion 14 intersect is provided with a base portion 12a to be mounted on a surface 10a of the object 10 to move on the surface 10a.

In the first cylindrical portion 13 is provided an electric motor 16 serving as a power source outputting a driving force. The electric motor 16 includes a stator, a rotor, and a rotating shaft 16a rotated integrally with the rotor. By power of the electric motor 16, the blade 17 serving as a tip end tool is reciprocated via planetary gears 22 of a planetary gear mechanism serving as a decelerating mechanism. The rotating shaft 16a serving as an output portion of the electric motor 16 is arranged in the first cylindrical portion 13 along an axial direction of the first cylindrical portion 13 of the first cylindrical portion 13. The rotating shaft 16a is rotatably supported by a first bearing 20 and a second bearing 20A arranged on a front side and a backside in the axial direction. The rotating shaft 16a is provided with a fan 18 cooling the electric motor 16 and a driving gear 19. A gear holder 21 is provided at the part at which the first cylindrical portion 13 and the second cylindrical portion 14 intersect, and the first bearing 20 is attached to this gear holder 21.

As illustrated in FIGS. 1 to 3 and FIGS. 4 to 6, to the gear holder 21 is rotatably attached via support shafts 23 and 23 a pair of upper and lower planetary gears 22 and 22 meshing with the driving gear 19. That is, the support shafts 23 and 23 rotatably supporting the planetary gears 22 and 22 are fixed to the main body 12 via the gear holder 21. Thus, a rotating direction of the driving gear 19 and a rotating direction of a ring gear 27 are opposite directions to each other. Accordingly, as described below, rotational moment is cancelled out at the time of driving of the electric motor 16, yawing of the main body 12 is restricted, and reduction in vibration is achieved.

In the second cylindrical portion 14 is provided a partition member 24 to be opposed to the gear holder 21. The partition member 24 is provided with a circular opening portion 25 centering on the driving gear 19. Also, in the opening portion 25, the bottomed cylindrical ring gear 27 having at an inner circumference thereof an internal tooth portion 26 to mesh with the planetary gears 22 and 22 is rotatably provided via a needle bearing 28 arranged at a part (a base portion side) of an outer circumference of the ring gear 27.

A part of the ring gear 27 in a circumferential direction thereof (a part of an outer circumference on a tip end side) is provided with an eccentric cam portion 30 adapted to drive an orbital cam 29a of an orbital mechanism 29 described below. To be more specific, an outer shape of the ring gear 27 is circular, and a circular hollow portion 27a is provided inside the ring gear 27 in an eccentric state (refer to FIG. 2). That is, a center of the inner circumference and a center of the outer circumference of the ring gear 27 are mutually eccentric. As a result, the part of the ring gear 27 in the circumferential direction thereof is provided with a thick portion serving as the eccentric cam portion 30. Also, the inner circumference in the hollow portion 27a is provided with the internal tooth portion 26 to mesh with the planetary gears 22.

As illustrated in FIG. 2 or 5, the orbital cam 29a is provided with an elliptic opening portion 31 sliding in contact with an upper surface portion and a lower surface portion of an outer circumferential surface of the ring gear 27. A vertical diameter of this opening portion 31 is approximately equal to an outside diameter of the ring gear 27 while a horizontal diameter of the opening portion 31 is as long as to allow rotation of the ring gear 27 doing eccentric movement.

The orbital cam 29a is made of a rigid thin plate material such as a metal plate. To guide movement of the orbital cam 29a, guide pins 32 are provided in the partition member 24, and guide grooves 33 are provided in the orbital cam 29a along an up-down direction to slidably engage with the guide pins 32.

To restrict vibration of the main body 12 along with reciprocating movement of a plunger 34 provided in the second cylindrical portion 14 in the up-down direction, a balance weight 36 is attached to a front portion of the ring gear 27 via a ring cam 35. The ring cam 35 has an approximately equal outer shape to that of the ring gear 27. However, the ring cam 35 is provided with no internal tooth portion 26 as the ring gear 27.

A circular covering portion 38 is fixed to an opening portion 37 of the ring cam 35, and the covering portion 38 including the ring cam 35 is fixed to a front end portion of the ring gear 27 by a bolt 39. In the covering portion 38 including the ring cam 35, a crankshaft 40 is provided to protrude at a position deviating from a center of the covering portion 38. To this crankshaft 40, a cylindrical connecting piece 41 is rotatably attached via a not-illustrated needle bearing. In the ring cam 35, a distance from a rotation center C1 (approximately a position of the bolt 39 in the present embodiment) of the ring cam 35 to an outer circumferential surface on a side arranged further on a side of the crankshaft 40 than the rotation center C1 is relatively short (thin), and a distance from the rotation center C1 to the outer circumferential surface on a side arranged on an opposite side of the crankshaft 40 is relatively long (thick). Thus, the ring cam 35 functions as a cam that causes the balance weight 36 to be reciprocated (the detail thereof will be described below). The balance weight 36 is reciprocated approximately in an opposite phase to that of the crankshaft 40 and those of the plunger 34 and the blade 17.

The balance weight 36 is made of a metal plate having predetermined weight as illustrated in FIG. 3 or 6. The balance weight 36 is approximately in a similar shape to that of the orbital cam 29a. The balance weight 36 is provided with an opening portion penetrating in a direction along the rotation center and elongated in the horizontal direction, and in this opening portion, the ring cam 35 having the covering portion 38 is arranged.

The balance weight 36 is provided at an upper portion thereof with a rectangular projecting portion 36a, and guide pins 42 are provided in the partition member 24 to regulate both side surfaces of this projecting portion 36a. The balance weight 36 is also provided at a lower portion thereof with linear slits 43 extending in the up-down direction, and guide pins 44 engaging with the slits 43 are fixed in the partition member 24 to regulate the moving direction of the balance weight 36 in the up-down direction.

In the second cylindrical portion 14, the plunger 34 is provided to enable reciprocating movement in the up-down direction and to be swingable in a front-back direction via a plunger holder 46. The plunger holder 46 is in a cylindrical shape to enable an upper end portion of the plunger 34 to be slidably supported in the up-down direction, and the upper end portion is provided with a swing supporting-point portion 47. Since the plunger 34 can be a vibration source, the upper end portion and the lower end portion of the plunger 34 are hollow-centered for weight saving to reduce vibration.

The plunger 34 is provided with a connector 48 slidably engaging with the connecting piece 41 and converting orbital movement of the connecting piece 41 into reciprocating movement of the plunger 34. The connector 48 has an engaging groove 48a along the horizontal direction. The plunger holder 46, the connecting piece 41, and the connector 48 constitute a movement converting portion 49. The connector 48 converts a movement force of the connecting piece 41 into a reciprocating movement force of the plunger 34.

Also, the lower end of the plunger 34 is provided with a holding portion 50 holding the blade 17, and a base of the blade 17 is held by this holding portion 50. The base portion 12a is provided with an opening portion allowing movement of the blade 17 and the orbital mechanism 29. The handle portion 15 is provided with a trigger 52. A power supply cord 53 is extracted from a boundary part between the handle portion 15 and the first cylindrical portion 13. The main body 12 is provided therein with a control portion 54. The control portion 54 includes an electric circuit connecting the power supply cord 53 to the electric motor 16 and a switch provided in the electric circuit. The control portion 54 connects or disconnects the switch based on an operation of the trigger 52.

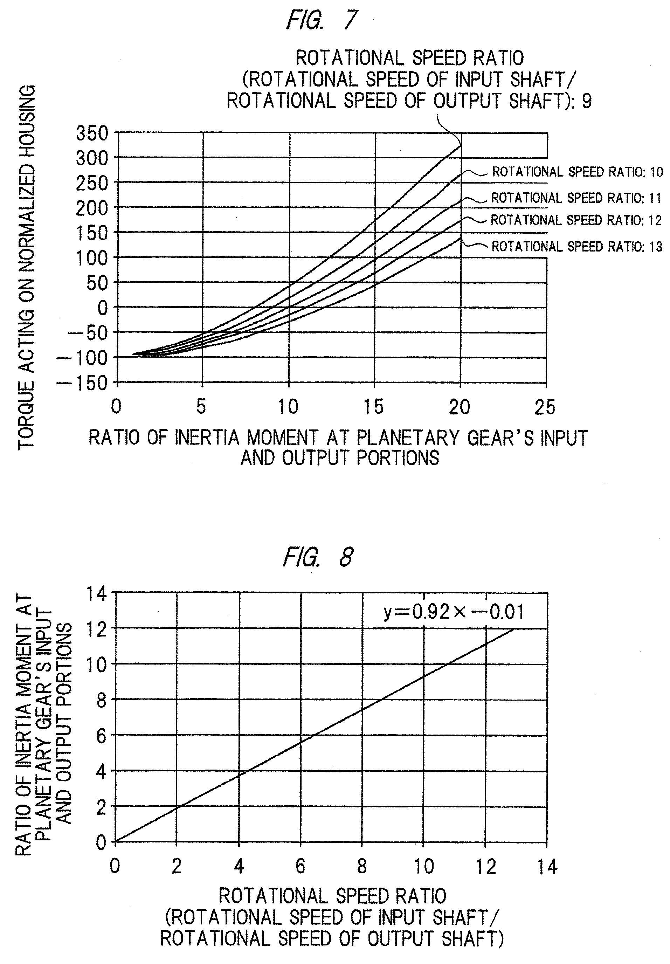

Next, operations of the jigsaw 11 will be described while FIG. 7 or 8 is referred to as needed. FIG. 7 is a graph illustrating relationship between a ratio of inertia moment at planetary gear' s input and output portions and torque acting on a normalized housing. FIG. 8 is a graph illustrating relationship between a rotational speed ratio of an input shaft and an output shaft and the ratio of inertia moment at the planetary gear' s input and output portions.

An operator connects the power supply cord 53 with an external power supply, thereafter holds the handle portion 15, and thrusts the base portion 12a of the main body 12 on the surface 10a of the object 10 (refer to FIG. 1). Subsequently, when the trigger 52 is activated, the switch of the control portion 54 is connected, power is supplied to the electric motor 16, and the rotating shaft 16a is rotated in one direction. Torque of the rotating shaft 16a is transmitted from the driving gear 19 via the planetary gears 22 to the ring gear 27. At this time, rotational speed of the ring gear 27 is lower than rotational speed of the electric motor 16, and torque of the ring gear 27 is higher than torque of the electric motor 16. That is, since the driving gear 19 and the planetary gears 22 constitute the decelerating mechanism, the rotational speed of the ring gear 27 is lower than rotational speed of the rotating shaft 16a when the torque of the electric motor 16 is transmitted to the plunger 34.

When the driving gear 19 is rotated, the ring gear 27 is driven to be rotated via the planetary gears 22. As a result, the ring gear 27 performs decelerated and high-torque rotating movement, and the ring cam 35, the bolt 39, the crankshaft 40, and the connecting piece 41 are integrally rotated. When the ring gear 27 is rotated, the connecting piece 41 performs orbital movement around the rotation center C1 in a plane perpendicular to the rotation center C1. A movement force of the crankshaft 40 is then transmitted via the connecting piece 41 to the connector 48, and the connector 48 and the plunger 34 perform reciprocating movement in a direction along a center line D1 or repeat rising and lowering. The blade 17 attached to the plunger 34 repeats rising and lowering to cause the object 10 to be cut by the blade 17. In this manner, in the jigsaw 11, the rotating movement of the rotating shaft 16a of the electric motor 16 is converted into the reciprocating movement of the plunger 34 and the blade 17. Also, the balance weight 36 is guided by the guide pins 44 engaging with the slits 43 and performs reciprocating movement in the up-down direction approximately in an opposite phase to those of the plunger 34 and the blade 17. Due to the reciprocating movement of the balance weight 36, vibration in the up-down direction caused by the reciprocating movement of the plunger 34 and the blade 17 is reduced.

Further, the jigsaw 11 includes the orbital mechanism 29. The orbital mechanism 29 swings the blade 17 in a predetermined angular range with the swing supporting-point portion 47 serving as a supporting point when the plunger 34 repeats rising and lowering. That is, the orbital mechanism 29 brings the blade 17 into contact with the object 10 in a procedure in which the plunger 34 rises and separates the blade 17 from the object 10 in a procedure in which the plunger 34 lowers. Accordingly, the object 10 can be cut efficiently.

FIGS. 7 and 8 describe effects of the present embodiment. In FIG. 7, "a ratio of inertia moment at planetary gear' s input and output portions" (a horizontal axis of the graph) refers to a ratio of inertia moment at a rotated assembled part (a rotor of the electric motor 16, the rotating shaft 16a, and the like) arranged further on a side of the electric motor than the driving gear 19 to inertia moment at a rotated assembled part 55 arranged on a side of the ring gear 27 when the inertia moment at the rotated assembled part arranged further on the side of the electric motor than the driving gear 19 is 1. Also, "torque acting on a normalized housing" (a vertical axis of the graph) refers to torque acting on a housing when torque at the driving gear 19 input from the electric motor 16 is 1. As illustrated in FIG. 7, when the ratio of inertia moment at the planetary gear' s input and output portions (the horizontal axis) is low, torque caused by a reaction force from the rotated assembled part arranged on the side of the electric motor acts on the housing in an opposite direction of the rotating direction of the electric motor 16. When the ratio of inertia moment at the planetary gear' s input and output portions (the horizontal axis) increases, the torque acting on the normalized housing (the vertical axis) increases. The rate of this increase is larger as a rotational speed ratio decreases more. When the torque acting on the housing is 0, the torque generated by the rotated assembled part arranged on the side of the electric motor and the torque generated by the rotated assembled part 55 arranged on the side of the ring gear 27 are equal to each other. At this time, a rotational reaction force is the smallest. The ratio of inertia moment is determined by shapes and materials of the respective members. For example, in a case in which the ratio of inertia moment at the planetary gear' s input and output portions is set to be high, the electric motor 16 can be a brushless motor or a small-diameter motor (for example, the length of the rotor in the axial direction is set to be twice or more as long as the diameter), or at least a part of the ring gear 27 and the ring cam 35 can be made of a metal having a greater specific gravity than that of the rotor or can be provided with thickness (a weight portion) not contributing to power transmission.

In FIG. 8, "a rotational speed ratio (input shaft rotational speed/output shaft rotational speed)" (a horizontal axis of the graph) refers to a ratio of rotational speed of the rotating shaft 16a of the electric motor 16 to rotational speed of the ring gear 27. A vertical axis has a similar meaning to that of the horizontal axis in FIG. 7. FIG. 8 illustrates relationship between the rotational speed ratio (x) and the ratio of inertia moment at the planetary gear's input and output portions (y) in a case in which the torque acting on the housing is 0. That is, by setting x and y to satisfy the following equation, the torque acting on the housing can be minimum.

$$y = 0.92x - 0.01$$

The most preferable examples of the motor rotational speed, the rotational speed of the ring gear, and the rotational speed ratio are as follows.

| | |
|---|---|
| Motor rotational speed: | 2800 rpm |
| Rotational speed of ring gear: | 249 rpm |
| Rotational speed ratio: | 11.25 |

By reducing the torque acting on the housing to about half, the operator can feel torque reduction at the time of activating the electric motor 16. This range is approximately a range of ($0.46x \leq y \leq 1.38x$). It is preferable to reduce the torque acting on the housing to about 20%. By doing so, the operator can feel significant torque reduction. To this end, the range can preferably be a range of ($0.73x \leq y \leq 1.11x$) and can more preferably be a range of ($0.82x \leq y \leq 1.01x$).

As described above, with the jigsaw 11 according to the present embodiment, reduction in vibration can be achieved. That is, the blade 17 serving as a tip end tool included in the jigsaw 11 is driven to be reciprocated via the driving gear 19, the planetary gears 22, the ring gear 27, and the movement converting portion 49 by the power of the electric motor 16 serving as a power source. At this time, the ring gear 27 is rotated around the rotation center by the power of the electric motor 16. The jigsaw 11 is also provided with the balance weight 36 restricting vibration generated by the reciprocating movement. Accordingly, in comparison with a conventional jigsaw having a spur gear, the centroid of the main body 12 is located at a low position, a distance between the blade 17 and the centroid is shortened, and moment acting on the centroid decreases. Also, vibration can be restricted or reduced.

Also, since the rotating shaft 16a of the electric motor 16 and the center of the ring gear 27 are coaxial, and the rotating shaft 16a and the ring gear 27 are rotated in opposite directions, yawing of the main body 12 can be restricted or prevented. Further, since the support shafts 23 of the planetary gears 22 are arranged on the upper and lower sides of the driving gear 19 with the driving gear 19 interposed therebetween and are fixed to the main body 12, balance can be maintained more easily than in a case in which the planetary gears 22 are arranged on the right and left sides of the driving gear 19 with the driving gear 19 interposed therebetween, and yawing of the main body 12 can be restricted effectively.

In this case, when the ratio of inertia moment at the assembled part 55 rotated in an equal direction to that of the ring gear 27 to inertia moment at the driving gear 19 is y, and the rotational speed ratio of the respective parts is x, y = 0.92x - 0.01 is established in the relationship between y and x. Accordingly, the torque acting on the housing, which is the main body 12, can be minimum, and yawing and vibration of the main body 12 can be restricted effectively. Further, since the orbital mechanism 29 adapted to swing the blade 17 in the front-back direction is provided at the outer circumference of the ring gear 27, the object 10 can be cut efficiently, and the operation efficiency can be improved. Meanwhile, the assembled part 55 rotated in an equal direction to that of the ring gear 27 refers to the ring gear 27, the ring cam 35, the bolt 39, the crankshaft 40, and the connecting piece 41.

The reciprocating tool according to the embodiment of the present invention has been described above. However, the reciprocating tool according to the present invention is not limited to the aforementioned embodiment and can be altered in various ways within the scope described in the patent claims. For example, the reciprocating tool is not limited to the jigsaw and includes a cutting tool, an electric drill, a screw tightening machine, and the like. The reciprocating tool also includes a reciprocating tool in which power of a commercial power supply is supplied to an electric motor via a power supply cord and a reciprocating tool in which power of a battery pack attached to a main body is supplied to an electric motor. The battery pack houses battery cells and is detachable from the main body.

The reciprocating tool according to the present invention includes a tool provided in a power transmission path thereof from a power source to a rotating member with a gear transmission device, a belt transmission device, and a friction transmission device. Also, the power source generating power to be transmitted to the tip end tool includes an electric motor, an engine, and a hydraulic motor. Also, the present invention includes a reciprocating tool transmitting power of a power source to a tip end tool, such as a hammer, a hammer driver, a hammer drill, a saber saw, and a hedge trimmer.

**REFERENCE SIGNS LIST**

| | |
|---|---|
| 10 | Object |
| 10a | Surface of object |
| 11 | Jigsaw (reciprocating tool) |
| 12 | Main body |
| 12a | Base portion |
| 13 | First cylindrical portion |
| 14 | Second cylindrical portion |
| 14a | Opening portion |
| 14b | Cover |
| 15 | Handle portion |
| 16 | Electric motor (power source) |
| 16a | Rotating shaft |

| 17 | Blade (tip end tool) |
| 18 | Fan |
| 19 | Driving gear |
| 20 | First bearing |
| 20A | Second bearing |
| 21 | Gear holder |
| 22 | Planetary gear |
| 23 | Support shaft |
| 24 | Partition member |
| 25 | Opening portion |
| 26 | Internal tooth portion |
| 27 | Ring gear |
| 28 | Needle bearing |
| 29 | Orbital mechanism |
| 29a | Orbital cam |
| 30 | Eccentric cam portion |
| 31 | Opening portion |
| 32 | Guide pin |
| 33 | Guide groove |
| 34 | Plunger |
| 35 | Ring cam |
| 36 | Balance weight |
| 37 | Opening portion |
| 38 | Covering portion |
| 39 | Bolt |
| 40 | Crankshaft |
| 41 | Connecting piece |
| 42 | Guide pin |
| 43 | Slit |
| 44 | Guide pin |
| 46 | Plunger holder |
| 47 | Swing supporting-point portion |
| 48 | Connector |
| 49 | Movement converting portion |
| 50 | Holding portion |
| 52 | Trigger |
| 53 | Power supply cord |
| 54 | Control portion |
| 55 | Assembled part |
| C1 | Rotation center |

**Claims**

1. A reciprocating tool comprising:

   a main body;
   a power source provided in the main body;
   a driving gear provided in the power source;
   planetary gears connected to the driving gear;
   a ring gear connected to the planetary gears;
   a movement converting portion converting rotation of the ring gear into reciprocating movement;
   a tip end tool driven by the movement converting portion; and
   a balance weight restricting vibration generated by the reciprocating movement,

   wherein the ring gear is rotated around a rotation center by power of the power source.

2. The reciprocating tool according to claim 1, wherein a support shaft rotatably supporting the planetary gears is fixed to the main body.

3. The reciprocating tool according to claim 1, wherein the driving gear and the ring gear are rotated in opposite directions to each other.

4. The reciprocating tool according to claim 1, wherein a center of the driving gear and a center of an inner circumference of the ring gear are coaxial.

5. The reciprocating tool according to claim 1, wherein each support shaft of the planetary gears is arranged on upper and lower sides of the driving gear with the driving gear interposed therebetween and are fixed to the main body.

6. The reciprocating tool according to claim 1, wherein, when a ratio of inertia moment at an assembled part rotated in an equal direction to that of an electric motor serving as the power source to inertia moment at an assembled part rotated in an equal direction to that of the ring gear is y, and a rotational speed ratio of the respective parts is x, $0.46x \leq y \leq 1.38x$ is established.

7. The reciprocating tool according to claim 6, wherein $0.73x \leq y \leq 1.11x$ is established.

8. The reciprocating tool according to claim 6, wherein $0.82x \leq y \leq 1.01x$ is established.

9. The reciprocating tool according to claim 1, wherein a part of the ring gear in a circumferential direction thereof is provided with a thick eccentric cam portion formed to cause the center of the inner circumference and a center of an outer circumference of the ring gear to be eccentric.

10. The reciprocating tool according to claim 9, wherein the outer circumference of the ring gear is provided with an orbital cam adapted to cause the tip end tool to swing in a front-back direction.

FIG. 1

*FIG. 2*

*FIG. 3*

FIG. 4

## FIG. 5

## FIG. 6

## FIG. 7

ROTATIONAL SPEED RATIO
(ROTATIONAL SPEED OF INPUT SHAFT/
ROTATIONAL SPEED OF OUTPUT SHAFT): 9

TORQUE ACTING ON NORMALIZED HOUSING

RATIO OF INERTIA MOMENT AT PLANETARY GEAR'S INPUT
AND OUTPUT PORTIONS

ROTATIONAL SPEED RATIO: 10
ROTATIONAL SPEED RATIO: 11
ROTATIONAL SPEED RATIO: 12
ROTATIONAL SPEED RATIO: 13

## FIG. 8

$y = 0.92 \times -0.01$

RATIO OF INERTIA MOMENT AT PLANETARY GEAR'S INPUT AND OUTPUT PORTIONS

ROTATIONAL SPEED RATIO
(ROTATIONAL SPEED OF INPUT SHAFT/
ROTATIONAL SPEED OF OUTPUT SHAFT)

FIG. 9

**INTERNATIONAL SEARCH REPORT**

| International application No. |
| --- |
| PCT/JP2014/076557 |

A.   CLASSIFICATION OF SUBJECT MATTER
*B23D51/16*(2006.01)i, *B23D49/16*(2006.01)i, *B27B19/04*(2006.01)i, *B27B19/09*
(2006.01)i

According to International Patent Classification (IPC) or to both national classification and IPC

B.   FIELDS SEARCHED

Minimum documentation searched (classification system followed by classification symbols)
B23D51/16, B23D49/16, B27B19/04, B27B19/09

Documentation searched other than minimum documentation to the extent that such documents are included in the fields searched
Jitsuyo Shinan Koho        1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y<br>A | US 2012/0192440 A1  (JERABEK JESSE J.),<br>02 August 2012 (02.08.2012),<br>paragraphs [0020] to [0024], [0026] to [0029];<br>fig. 2 to 7<br>& EP 2481508 A1        & CN 102615346 A | 1-5<br>6-10 |
| Y<br>A | WO 2006/041407 A1  (INDOCEAN DIAMOND TOOLS<br>(BERMUDA) LTD.),<br>20 April 2006 (20.04.2006),<br>description, page 7, lines 10 to 27; fig. 1<br>& US 2009/0199416 A1 | 1-5<br>6-10 |
| Y<br>A | JP 11-300520 A  (Higuchi Densetsu Yugen Kaisha),<br>02 November 1999 (02.11.1999),<br>paragraphs [0007], [0024]; fig. 3 to 4, 6 to 7<br>(Family: none) | 1-5<br>6-10 |

| ☒ | Further documents are listed in the continuation of Box C. | ☐ | See patent family annex. |

| | |
| --- | --- |
| *     Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    15 October, 2014 (15.10.14) | Date of mailing of the international search report<br>    28 October, 2014 (28.10.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/076557

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2011/072436 A1 (ROBERT BOSCH TOOL CORP.), 23 June 2011 (23.06.2011), fig. 1, 4 to 7<br>& GB 2488742 A         & CN 102665986 A | 1-10 |

Form PCT/ISA/210 (continuation of second sheet) (July 2009)

**EP 3 053 686 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4525532 B